Europäisches Patentamt

**European Patent Office**

**Office européen des brevets**

(19)

(11) Publication number: **0 085 259**

**A2**

# (12) EUROPEAN PATENT APPLICATION

(21) Application number: **82306979.4**

(22) Date of filing: **24.12.82**

(51) Int. Cl.³: **B 60 G 11/12**
**F 16 F 1/30**

(30) Priority: **30.12.81 GB 8139155**

(43) Date of publication of application:
**10.08.83 Bulletin 83 32**

(84) Designated Contracting States:
**DE FR GB**

(71) Applicant: **LEYLAND VEHICLES LIMITED**
**Lancaster House**
**Leyland Preston Lancashire(GB)**

(72) Inventor: **Riach, Alan Bryson**
**51 Kaim Crescent**
**Bathgate West Lothian Scotland(GB)**

(74) Representative: **Rock, Olaf Colin et al,**
**LRL Patent Trademark and Licensing Dept. Cowley Body**
**Plant**
**Cowley Oxford OX4 5NL(GB)**

(54) **Vehicle suspension element.**

(57) A semi-elliptic leaf spring 1 is connected to a vehicle frame member 3, at one end, pivotally to a bracket 2, and at the other end by means of a shackle 9 and a bracket 10. The shackle 9 is hung from the leaf spring and carries the bracket 10 by means of bolts 11.

The shackle is made of a continuous band of material which can be resiliently deformed in cross-section: it consists of a core of cords and a surrounding sheath of rubber or plastics material.

The bracket has a stop surface 10 to restrain the leaf spring if the connection to the bracket 2 fails, lateral surfaces 10e to restrain the adjacent part of the leaf spring against sideways movement and a rebound surface 10d.

The suspension element has the advantages of a conventional shackle, and resiliently deformable components, while not being unduly costly.

FIG 4

VEHICLE SUSPENSION ELEMENT

This invention relates to vehicle suspension elements, and especially to leaf springs.

On a conventional semi-elliptic leaf spring suspension, such as is often used on commercial vehicles, a shackle or slipper pad is necessary at one end of the spring, normally the rear, in order to allow the spring to deflect freely in its simple first bending mode.

A slipper pad is less costly than a shackle but exhibits frictional characteristics which affect the ride of the vehicle. For this reason, shackles are preferred.

The shackles may use non-resilient pivots such as brass/steel or plastic/steel or resilient pivot bushes, the latter giving advantages in terms of vibration isolation and reduced maintenance. However the cost of these bushes is significant.

The invention provides a suspension element for a vehicle which comprises a leaf spring, a shackle hung from one end of the leaf spring, and a bracket to be secured to the vehicle carried by the shackle, wherein the shackle is a continuous band of material resiliently deformable in cross-section.

0085259

The band described allows the suspension element to combine the advantage of a shackle with that of resilience, while not incurring the penalty of high cost.

Advantageously, the bracket has a stop surface arranged in line with the end of the leaf spring, in order to prevent travel of the leaf spring in the event of failure of the front pivot of the leaf spring. Preferably, the bracket has lateral location surfaces to restrict sideways movement of the part of the leaf spring carrying the shackle.

The bracket may also have a rebound surface beneath the part of the leaf spring carrying the shackle, to provide a stop to the limit rebound of the vehicle (and thus the bracket) relative to the leaf spring. Vertical location of the leaf spring in the event of shackle failure may be provided by the end of the spring contacting a top surface of the bracket located above the spring.

The band forming the shackle advantageously comprises cords surrounded by a sheath of resilient material. The sheath may be of rubber or plastics material; and the cords may be continuous wound fibres or plastics cords or steel, or any other suitable material which will prevent undue stretching of the band. A suspension element for a vehicle suspension will now be described, by way of example, with reference to the accompanying drawings, in which:

Figure 1 shows a first known arrangement of suspension element;

Figure 2 shows a second known arrangement of suspension element;

Figure 3 shows a third known arrangement of suspension element;

Figure 4 shows the arrangement of the invention;

Figure 5 is a section taken on the lines A-A of Figure 4; and

Figure 6 is a partly cut-away view of the band forming the shackle of the suspension element.

Like parts are given the same reference numerals throughout all the Figures.

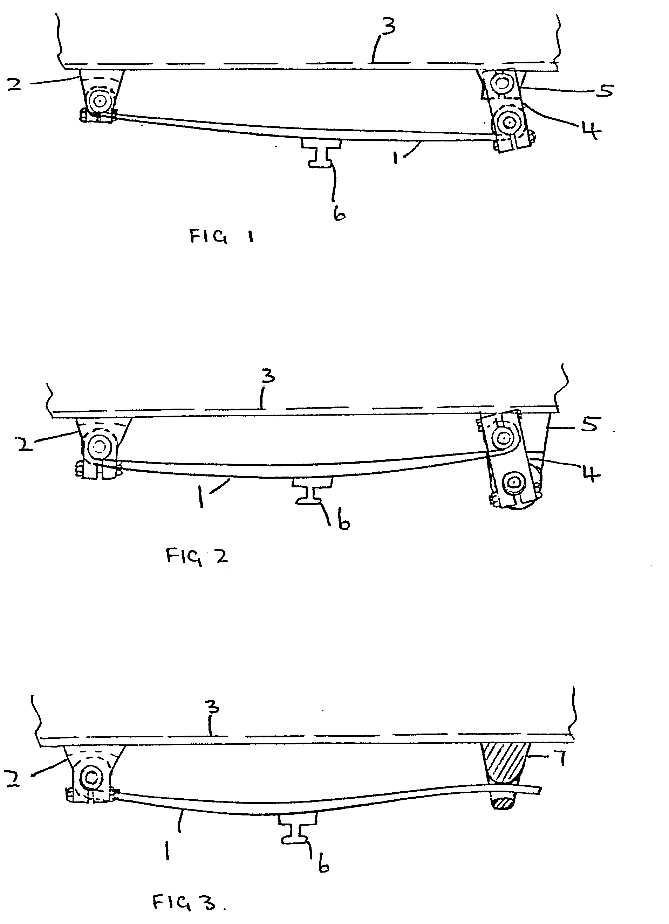

Referring to Figure 1, the known suspension element comprises a semi-elliptic leaf spring 1 pivotally connected at one end by a bracket 2 to a vehicle frame member 3 and connected to the frame member at the other end by a shackle 4 and shackle bracket 5. The ends of the leaf spring are each bent over to form eyes to make the connection.  The connections of the bracket to the shackle and the leaf spring to the shackle are pivotal, and may either be non-resilient, such as brass/steel or plastics/steel, (in the latter case, the pivot pin being steel and the bush being plastics) or by means of a more costly resilient bush.  An axle 6 connects to the centre of the leaf spring in the usual way.

Figure 2 shows a variant on the arrangement of Figure 1 in that the shackle 4 is hung from the leaf spring 1 (the shackle bracket 5 being correspondingly extended) rather than being hung from the shackle bracket as in Figure 1.

Figure 3 shows another known arrangement where the leaf spring 1 is pivotally connected at one end only and rests on a slipper pad 7 at its other end; although a low cost arrangement, it exhibits frictional characteristics which adversely affect the ride of the vehicle.

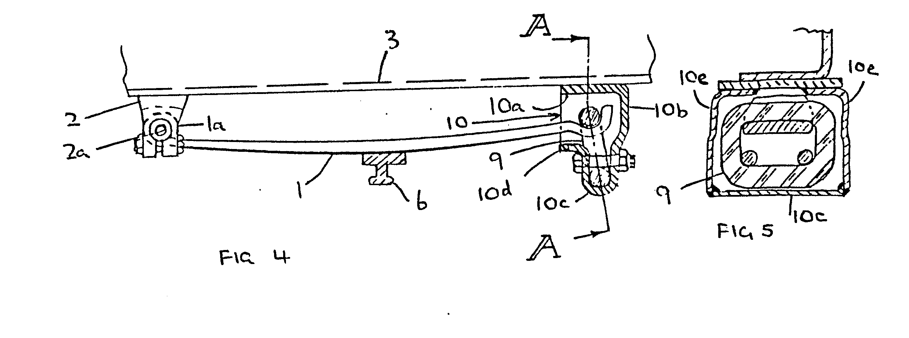

The arrangement of the invention is shown in Figures 4 to 6.  The leaf spring 1 is pivotally mounted at one end on a bracket 2 connected to a vehicle frame member 3.  The end of the leaf spring is bent around to form an eye 1a which surrounds bolt 2a passing through the bracket 2. The leaf spring is connected to the axle 6 midway along its length.  Unlike the arrangements of Figures 1 and 2, the other end of the leaf spring does not have an eye but rather has a depression 8 which forms a seat for band 9 which forms the shackle. The band 9 hangs from the leaf spring as in the prior art arrangement of Figure 2.

The band 9 is connected to the vehicle frame member 3 by means of a bracket 10. As can be seen from Figure 4, the bracket 10 has a top surface 10a, an end stop surface 10b, a lower U-shaped part 10c, a lip 10d, and lateral surfaces 10e. Surfaces 10a to 10d are formed from a suitably bent piece of metal and surfaces 10e are welded thereto. The bracket 10 is carried on the shackle band 9 by means of bolts 11 which pass through the two sides of the U-shaped part. Top surface 10a holds the leaf spring 1 against upward movement if the shackle breaks. End surface 10b restrains the leaf spring against movement to the right (as seen in Figure 4) if the bracket 2 or the eye 1a or bolt 2a fails. The lip 10d prevents the vehicle lifting off its springs beyond a certain degree because it restrains upward movement of the bracket 10 relative to the spring 1. The lateral surfaces 10e prevent sideways movement of the shackle band 9.

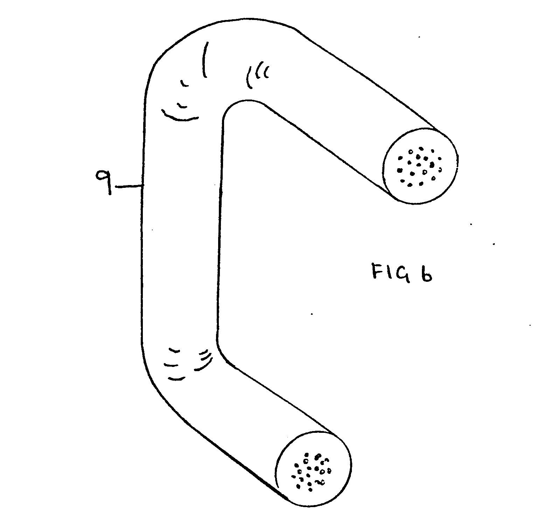

The band itself (Figure 6) consists of a central core of cord surrounded by an outer sheath of rubber or plastics: it is thus resiliently deformable in the plane of its cross-section but not along its length. The core could consist of plastics cord, such as rayon or nylon, or could be of steel. It may be convenient for such cords to be wound around a former. Also, the cross-section of the sheath could be square or rectangular.

It will thus be seen that the shackle replaces the function of a bush or bushes in a conventional shackle whilst being able to carry the load in tension without undue deflection. The suspension element has the advantage of a shackle over the known slipper arrangement of Figure 3, and the advantage of resilience, and also has low initial and maintenance costs.

## CLAIMS

1. A suspension element for a vehicle which comprises a leaf spring, a shackle hung from one end of the leaf spring, and a bracket to be secured to the vehicle carried by the shackle, wherein the shackle is a continuous band of material resiliently deformable in cross-section.

2. A suspension element as claimed in claim 1, wherein the bracket has a stop surface arranged in line with the end of the leaf spring.

3. A suspension element as claimed in claim 1 or claim 2, wherein the bracket has lateral location surfaces to restrict sideways movement of the part of the leaf spring carrying the shackle.

4. A suspension element as claimed in any one of claims 1 to 3, wherein the bracket has a rebound surface beneath the part of the leaf spring carrying the shackle.

5. A suspension element as claimed in any one of claims 1 to 4, wherein the band comprises a core of cords surrounded by a sheath of resilient material.

6.  A suspension element as claimed in claim 5, wherein the sheath is of rubber or plastics material.

7.  A suspension element as claimed in claim 5 or claim 6, wherein the cords are continuous wound fibres.

8.. A suspension element as claimed in any one of claims 5 to 7, wherein the cords are of plastics material.

9.  A suspension element as claimed in any one of claims 1 to 8, wherein the leaf spring is semi-elliptic.

10. A vehicle having at least one suspension element as claimed in any one of claims 1 to 9.

FIG 1

FIG 2

FIG 3.

FIG 5

FIG 4

0085259

FIG 6